# EUROPEAN PATENT APPLICATION

(11) **EP 2 202 407 A2**
(43) Date of publication of application: **30.06.2010**
(21) Application number: 09178259.9
(22) Date of filing: 08.12.2009
(51) Int. Cl.: F03D 11/00, F03D 7/02, F03D 7/04

(54) **Wind turbine yaw bearing determination**

(30) Priority: 23.12.2008 US 342120
(71) Applicant: General Electric Company, Schenectady, NY 12345 (US)
(72) Inventor: McCorkendale, Timothy E., Tehachapi, CA 93561 (US)
(74) Representative: Bedford, Grant Richard

(57) **Abstract**

A wind turbine (2) includes a sensor (22) for determining a position indicative of a yaw bearing of the wind turbine.

## Description

The subject matter described here generally relates to wind turbines, and, more particularly, to determining yaw bearing using positioning systems.

A wind turbine is a machine for converting the kinetic energy in wind into mechanical energy. If the mechanical energy is used directly by the machinery, such as to pump water or to grind wheat, then the wind turbine may be referred to as a windmill. Similarly, if the mechanical energy is converted to electricity, then the machine may also be referred to as a wind generator or wind power plant.

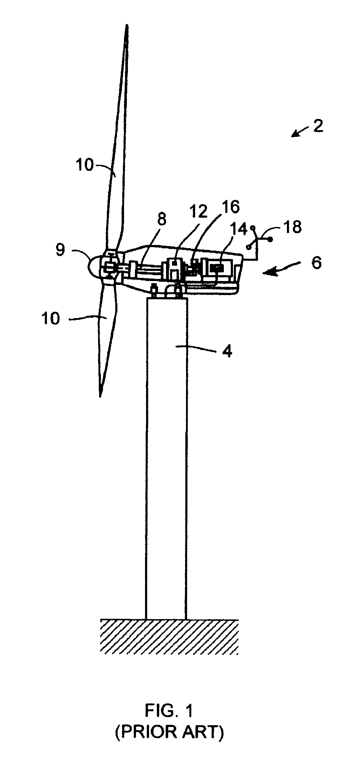

Wind turbines are typically categorized according to the vertical or horizontal axis about which the blades rotate. One so-called horizontal-axis wind generator is schematically illustrated in Figure 1 and available from General Electric Company. This particular configuration for a wind turbine 2 includes a tower 4 supporting a nacelle 6 enclosing a drive train 8. The blades 10 are arranged on a hub 9 to form a "rotor" at one end of the drive train 8 outside of the nacelle 6. The rotating blades 10 drive a gearbox 12 connected to an electrical generator 14 at the other end of the drive train 8 arranged inside the nacelle 6 along with a control system 16 that receives input from an anemometer 18.

The anemometer 18 often includes a vane or other device for determining wind direction which the control system 16 then uses to rotate the "bearing" of the nacelle 6 on its vertical "yaw" axis in order to position the blades 10 so that they are facing into the wind. For example, commonly-assigned U.S. Patent No. 7,126,236 discloses a yaw orientation system and is incorporated by reference here in its entirety. However, turbulent airflow caused by the blades 10 can decrease the accuracy of the wind direction that is sensed by the anemometer 18.

Modem wind turbine yaw control systems typically rotate the nacelle until the wind vane lines up with the nacelle orientation, at which point the yaw motion stops. In other words, yawing is performed relative to the wind direction, and not relative to a compass direction. Even if a turbine had a 100 degree error in nacelle position, the turbine wind vane would still cause the control system to yaw the nacelle into the wind properly.

In addition, even when the wind direction can be accurately determined, the current bearing of the nacelle may not be known with sufficient accuracy in order to precisely reposition blades into the next yaw bearing. This problem arises because the initial "absolute" yaw position of the nacelle is typically set only once during the turbine commissioning using an error prone manual system of landmark sightings and compass headings. Once set, that absolute yaw position reference point can drift over time due to power interruptions, control system problems, and/or other factors.

Consequently, any bearing changes that are based upon such an incorrect absolute yaw position may also be incorrect, preventing the blades 10 being accurately repositioned. A secondary technique for determining yaw bearing must therefore often be provided during power performance and load testing where accurate positioning is critical to obtaining useful results.

These and other aspects associated with such conventional approaches are addressed here in by providing, in various embodiments, a wind turbine comprising a position sensor for determining a position indicative of a yaw bearing of the wind turbine.

Various aspects of this technology will now be described with reference to the following figures ("FIGs.") which are not necessarily drawn to scale, but use the same reference numerals to designate corresponding parts throughout each of the several views, and in which:
FIG. 1 is a schematic side view of a conventional wind generator.
FIG. 2 is a schematic top view of a wind turbine system including the upper portion of the wind generator shown in FIG. 1
FIG. 3 is a schematic front view of a wind turbine system shown in FIG. 2.
FIG. 4 is a schematic side view of the wind turbine system shown in FIG. 2.

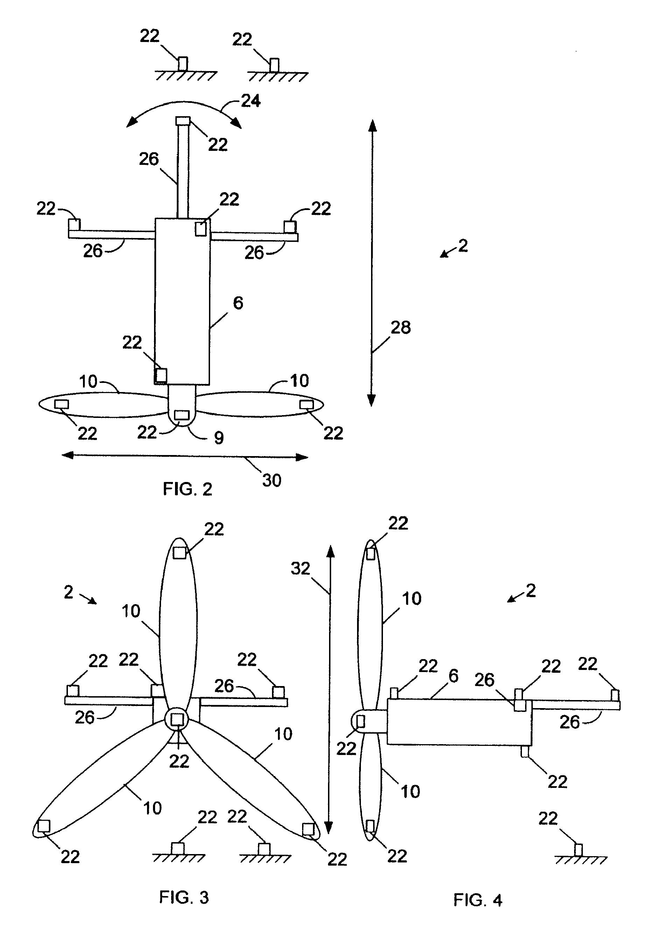

FIGs. 2, 3, and 4 are schematic top, front, and side views, respectively, of a wind turbine system having one or more position sensors 22 for use with the wind turbine 2 shown in FIG. 1. However, the technology describe here may also be used with any other wind turbine.

One or more of the position sensors 22 may include, but is not limited to, a global position sensor for determining vertical and/or horizontal position using the Global Positioning System of global navigation satellites including any of the various augmentation systems, such as Assisted GPS, Differential GPS (e.g., OmiSTAR, StarFire, DGPS, NDGPS), Inertial Navigation Systems, Wide Area Augmentation System, Satellite Band Augmentation System, European Geostationary Navigation Overlay Service, and/or Multi Satellite Augmentation System. Some or all of the position sensors 22 may be arranged at various locations, including but not limited to those illustrated hear, for determining position(s) indicative of a yaw bearing of the wind turbine 2. For example, the position sensors 20 may be arranged on components of the wind turbine 2 that move with the yaw bearing of the wind turbine. Some of the position sensors 22 may also be arranged on stationary portions of the wind turbine 2 and/or on other stationary structures such as a meteorological mast or on the ground.

One, two, or more of the position sensors 22 may be used for determining a point position indicative of a yaw bearing of the wind turbine. For example, a single position sensor 22 may be used to indicate a point position (such as longitude and latitude) on an arc 24 traced by the sensor as it moves with the yaw of the turbine 2. The yaw bearing of the wind turbine 2 may then be deduced from the position of that single sensor 22 relative to the substantially fixed center of rotation of the turbine 2. The position sensors 22 may also be used for determining positions indicative of bearing on other axes besides yaw. The point position of any portion of the turbine 2 may also be determined from two directional bearings toward fixed points of the turbine.

Since the precision of the position indicated by the sensor 22 may be increased with the size of the traced arc 24, any of the sensors 22 may be arranged as far as possible from the center of yaw rotation of the wind turbine 2. For example, the position sensor 22 may be arranged near the front or back of the nacelle 6, in the hub 7, and/or in the blades 10. Alternatively, or in addition, the position sensors 22 may be arranged a boom or extensions 26 that further displaces the position sensor 22 from the center of yaw rotation of the turbine 22.

Two or more position sensors 22 may also be used for determining a line position indicative of a yaw bearing, or any other bearing, of the wind turbine 2. For example, as best illustrated in FIGs. 2 and 4, two or more of the sensors 22 arranged near the front and back of the nacelle 6 may be used to determine a line position corresponding to the drive train axis 28. Alternatively, or in addition, two or more sensors 22 arranged near tips of the blades 10 may be used to determine a line position that is perpendicular to the drive train axis 28, such as the horizontal rotor plane axis 30 and/or the vertical rotor plane axis 32.

Standard geometric and/or trigonometric transformations may be used to correlate these line positions with a particular axis of the wind turbine 2. For example, the position sensors 22 may be arranged to communicate with the control system 16 that can use the raw sensor information to detect and/or control the yaw bearing the wind turbine 2.

The position sensors 22 may be arranged to provide substantially continuous and/or intermittent position information. For example, position sensors 22 in the blades 10 may be arranged to provide information at only certain positions in the blade rotation, such as when the blade is in a substantially horizontal position at each side of the blade sweep. Alternatively, any current position of a sensor 22 in one blades may be compared to a current position of a sensor 22 in another blade in order to deduce the rotor plane axes 30 and 32, and the corresponding yaw bearing when the blades are arranged in those rotor plane axes.

The technology describe above offers a various advantages over conventional approaches. For example, it will help to maintain accurate wind turbine directional orientations over time and minimize the amount of setup time that is normally required during commissioning and/or revamping of the turbine 2. It also eliminates the need for any secondary yaw bearing determination system that is sometimes required in order to make precise field measurements, such as power performance measurements. Additional power performance monitoring may therefore be conducted over the life of each turbine. Moreover, this technology will allow the control system 16 to more-accurately control the wind turbine yaw direction in response to free stream wind monitored conditions, resulting in improved energy capture from the wind.

The technology disclosed here also allows yawing to be performed relative to a compass direction, rather than merely rotating the nacelle until the sensed wind direction is perpendicular to the rotor face, as with conventional systems. This allows wind direction to be measured at a point away from the turbine 2 where the compass direction can be determined in free stream wind. Such free stream wind directions can then be sent to the turbine control system 16, and the control system, equipped with GPS bearing determination, can then accurately yaw to this new compass-based direction. For example, wind motion parameters including direction, shear, and turbulence can be mapped using a met-mast, SODAR, LIDAR and/or other remote wind sensing technology that can then be used to provide the control system 16 with an absolute compass direction provided by those systems.

It should be emphasized that the embodiments described above, and particularly any "preferred" embodiments, are merely examples of various implementations that have been set forth here to provide a clear understanding of various aspects of this technology. One of ordinary skill will be able to alter many of these embodiments without substantially departing from scope of protection defined solely by the proper construction of the following claims.

Various aspects and embodiments of the present invention are defined by the following numbered clauses:
1. A wind turbine, comprising a sensor for determining a position indicative of a yaw bearing of the wind turbine.
2. The wind turbine recited in clause 1 wherein the sensor is arranged on a blade of the wind turbine.
3. The wind turbine recited in any preceding clause wherein the sensor is arranged near a tip of the blade.
4. The wind turbine recited in any preceding clause wherein the sensor determines the position when the blade is in a predetermined configuration.
5. The wind turbine recited in any preceding clause wherein the predetermined configuration is substantially horizontal.
6. The wind turbine recited in any preceding clause, further comprising a second sensor, displaced from the other sensor, for determining a second position indicative of a yaw bearing of the wind turbine.
7. The wind turbine recited in any preceding clause, further comprising a second sensor, arranged near a tip of a second blade, for determining a second position indicative of a yaw bearing of the wind turbine.
8. The wind turbine recited in any preceding clause, further comprising a second sensor, arranged near a tip of a second blade, for determining a second position indicative of a yaw bearing of the wind turbine.
9. The wind turbine recited in any preceding clause wherein the positions indicative of yaw bearing are determined when the blades are substantially horizontal.
10. A wind turbine, comprising
   a tower;
   a gearbox connected to an electrical generator arranged on the tower;
   a plurality of blades for rotating the gearbox and driving the generator; and
   a first global position sensor arranged on one of the blades for determining a position indicative of a yaw bearing of the wind generator.
11. The wind turbine recited in any preceding clause, further comprising a second global position sensor, displaced from the first position sensor, for determining a second position indicative of a yaw bearing of the wind turbine.
12. The wind turbine recited in any preceding clause, wherein the second global position sensor is arranged on another one of the blades of the wind generator.
13. The wind turbine recited in any preceding clause, wherein each of the blades includes a global position sensor.
14. The wind turbine recited in any preceding clause, wherein each of the global position sensors is arranged near a tip of the corresponding blade.
15. The wind turbine recited in any preceding clause, wherein each of the global position sensors is arranged near a tip of the corresponding blade.
16. The wind turbine in any preceding clause, wherein the position indicative of yaw bearing is determined when the blade is substantially horizontal.
17. The wind turbine in any preceding clause, wherein the first and second positions indicative of yaw bearing are determined when the blade is substantially horizontal.
18. The wind turbine in any preceding clause, wherein the first and second positions indicative of yaw bearing are determined when the blades are substantially horizontal.
19. The wind turbine in any preceding clause, wherein the first and second positions indicative of yaw bearing are determined when the blades are substantially horizontal.

## Claims

1. A wind turbine (2), comprising a sensor (22) for determining a position indicative of a yaw bearing of the wind turbine.

2. The wind turbine (2) recited in any of the preceding claims wherein the sensor (22) is arranged on a blade (10) of the wind turbine.

3. The wind turbine (2) recited in any of the preceding claims wherein the sensor (22) is arranged near a tip of the blade (10).

4. The wind turbine (2) recited in any of the preceding claims wherein the sensor (22) determines the position when the blade (10) is in a predetermined configuration.

5. The wind turbine (2) recited in claim 4 wherein the predetermined configuration is substantially horizontal.

6. The wind turbine (2) recited in any of the preceding claims further comprising a second sensor (22), displaced from the other sensor (22), for determining a second position indicative of a yaw bearing of the wind turbine.

7. A wind turbine (2), comprising
a tower (4);
a gearbox (12) connected to an electrical generator (14) arranged on the tower;
a plurality of blades (10) for rotating the gearbox (12) and driving the generator (14); and
a first global position sensor (22) arranged on one of the blades (10) for determining a position indicative of a yaw bearing of the wind turbine.

8. The wind turbine (2) recited in claim 7, further comprising a second global position sensor (22), displaced from the first position sensor (22), for determining a second position indicative of a yaw bearing of the wind turbine.

9. The wind turbine (2) recited in claim 8 wherein the second global position sensors (22) is arranged on another one of the blades (10) of the wind generator.

10. The wind turbine (2) recited in claims 7-9 wherein each of the blades (10) includes a global position sensor (22).

11. The wind turbine (2) recited in claims 7-10 wherein each of the global position sensors (22) is arranged near a tip of the corresponding blade (10).

12. The wind turbine (2) in claim 7-11, wherein the position indicative of yaw bearing is determined when the blade (10) is substantially horizontal.
